Europäisches Patentamt

(19) European Patent Office

Office européen des brevets

(11) Publication number: **0 015 781**
**A1**

(12) **EUROPEAN PATENT APPLICATION**

(21) Application number: **80300766.5**

(22) Date of filing: **12.03.80**

(51) Int. Cl.³: **A 23 N 17/00**

(30) Priority: **12.03.79 GB 7908697**

(43) Date of publication of application: **17.09.80**
**Bulletin 80/19**

(84) Designated Contracting States: **DE FR GB IT NL SE**

(71) Applicant: **BERWYN ENGINEERING LIMITED, Euridge**
**Works Thickwood Chippenham, Wiltshire SN14 8BG (GB)**

(72) Inventor: **Grainger, David Peter, Bencross House**
**Ditteridge Box, Wiltshire (GB)**
Inventor: **Nott, Peter, 17 Summerhill Road Lansdown**
**Bath, Avon (GB)**

(74) Representative: **Armitage, Ian Michael, MEWBURN**
**ELLIS & CO. 70/72 Chancery Lane, London WC2A 1AD**
**(GB)**

(54) **Apparatus for applying liquid to particulate material.**

(57)   Apparatus for applying caustic liquid to grain comprises an auger (14) for transporting the grain and a system supplying the liquid to a nozzle (22) in the auger inlet. The liquid supply system comprises a positive displacement pump (26) delivering liquid to the nozzle via an adjustable throttle valve (30). A constant liquid pressure is provided by a relief valve (36) which bleeds off excess liquid and returns it to the pump inlet. A switch (40) on the relief valve shuts down the auger and pump if the liquid supply is too low, and a switch (20) responsive to the presence of grain in the auger shuts down the liquid supply and auger if the grain supply ceases. Alternative sensors (44, 50) responsive to grain flow rate are disclosed for switching off the auger or for varying the liquid flow rate in accordance with the grain flow rate.

# APPARATUS FOR APPLYING LIQUID TO
# PARTICULATE MATERIAL

This invention relates to the application of liquid to particulate material and especially to cereal grain.

It is known to apply preserving liquid, usually propionic acid, to grain at relatively low rates (e.g. 1 - 2 gallons/ton) using gravity feed of the liquid from a container to nozzles in an auger for the grain. Low output pumping may also be used, typically by means of a centrifugal pump. The advantage of this latter type of pump is that the outlet can be throttled as desired to adjust the flow rate. For higher rates of flow, however, (e.g. about 5 gallons/ton) a centrifugal pump is not so appropriate, but positive displacement pumps cannot usually be throttled down to any great extent to vary the flow rate. Such higher flow rates are required for example in applying caustic solution to grain, which has the effect of chemically breaking down the cellulose fibre to make it easier for animals to digest, and also of preserving the grain in storage. However strong caustic solution is a dangerous material to use, so that apparatus for applying it to the grain should be designed to be suitably safe in operation. In the following description the term "grain" will be used generically (unless otherwise indicated) to mean any particulate material to which liquid is to be applied.

The apparatus of the present invention comprises apparatus for applying liquid to grain, comprising a motor driven auger along which the grain is to be transported from an inlet to an outlet, supply means for injecting liquid into the moving grain, and an auger sensor responsive to the flow of grain through the auger and arranged to vary or shut off the liquid supply in accordance with the sensed rate of flow or the absence of flow of grain. Suitably the liquid is injected into the grain in the inlet before it enters the auger, so that the liquid is distributed in the grain by the mixing effect as the grain enters the auger.

Liquid can be supplied by a pump, the outlet of which is connected to a flow control throttle valve, a pressure relief valve being located so as to bleed off liquid when a predetermined pressure is reached and return the diverted liquid directly or indirectly to the inlet side of the pump, thereby maintaining a substantially constant predetermined liquid pressure to the flow control valve so that the latter can be calibrated or adjusted by the auger sensor to determine the flow rate. The flow control valve can be fixed, to provide a given flow rate for a given liquid pressure. Preferably, however, it is adjustable to vary the flow rate.

The apparatus thus incorporates a safety mechanism whereby the supply of liquid is adjusted to the rate of flow of grain or is cut off if the supply of grain to the auger varies or if it falls to too low a level. Cut off may be by means of a switch arranged to be sensitive to varying axial pressure on the auger axis, so that the axial load experienced when the auger is conveying grain keeps the switch in a condition which maintains the liquid supply, but the lower load experienced when the supply of grain ceases changes the condition of the switch to cut off the liquid supply. The switch may operate to cut off the drive to the auger as well as the supply of liquid to the nozzle.

Adjustment of the liquid flow may be provided by a motorised adjustable flow control valve, or by a variable speed motor driving a positive displacement pump, or by a variable displacement pump driven by a constant speed motor. A control unit may be provided to receive the signal indicating the rate of flow of grain, determine the appropriate rate of flow of liquid and adjust the flow control valve, the pump speed or the pump displacement until the determined liquid flow rate is achieved as indicated by the pump speed, pump displacement, flow control valve setting, or feedback from a liquid flow meter.

Sensing of the grain flow may be by means of a load sensor which senses the axial load on the auger shaft and gives an output signal proportional to the sensed load. Alternatively sensing could be effected by means of an element biased into the path of the grain and giving a signal proportional to the degree of its deflection by the grain. Alternatively, if it is assumed that the grain flow is proportional to auger torque multiplied by auger r.p.m., the grain flow rate can be sensed by detecting the auger speed, torque or load. This can be effected by, for example, measuring the drive motor r.p.m. in the case of an electric induction motor; measuring the drive motor current; or mechanical shaft torque measurement, using for example a strain gauge, where the drive speed is virtually constant.

The apparatus may also incorporate a safety mechanism whereby the drive to the apparatus is stopped if the supply of liquid to the grain ceases or falls below a predetermined pressure. This mechanism may comprise a switch sensitive to liquid pressure in the output from the pump. Conveniently the switch may be associated with the pressure relief valve so that it operates to stop the auger if the valve is not bleeding off any liquid.

Both of the above types of safety mechanism may require an over-ride mechanism to enable the apparatus to be started. This may be provided simply by the electrical starting switch which is spring-loaded. The apparatus will start and run so long as the starting switch is held on. The safety switch or switches will then keep the apparatus running when the starting switch is released if the proper operating conditions are present.

In order that the invention may be more clearly understood, one embodiment will now be described with reference to the accompanying drawings, wherein:

Fig. 1 shows diagrammatically the apparatus for applying liquid to grain;

Fig. 2 shows a suitable electrical switching circuit;

Fig. 3 shows diagrammatically the auger outlet with an alternative safety switch arrangement; and

Fig. 4 shows a general system for controlling liquid supply in accordance with grain flow.

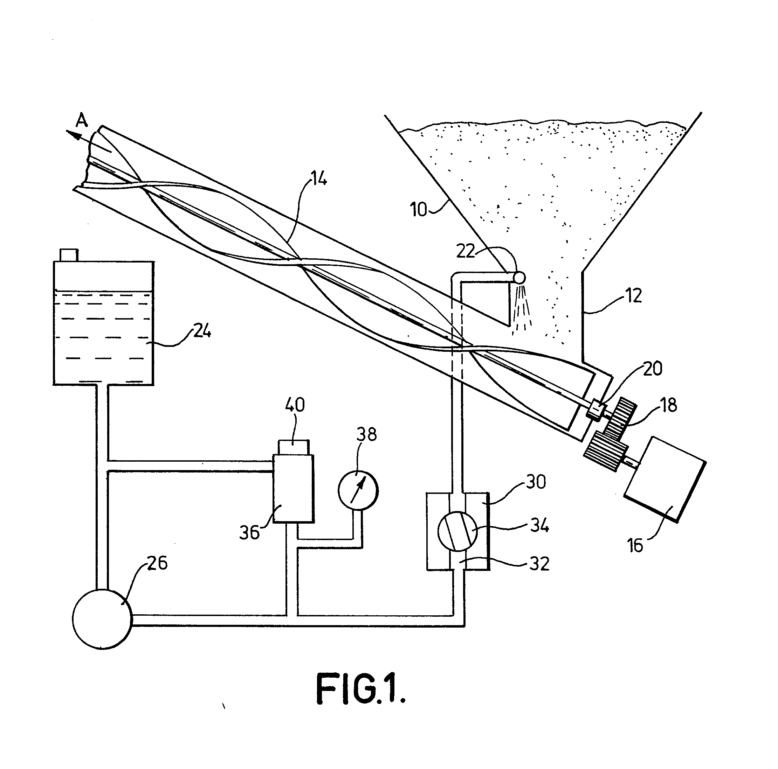

Referring to Fig. 1 of the drawings the apparatus comprises a hopper 10 for grain, with an outlet passage 12 at the bottom which leads to the inlet of an auger 14 for conveying the grain as indicated by the arrow A. The auger is rotated by a motor 16 through gearing 18 which allows axial movement of the auger shaft, which axial movement is restrained by suitable bearings, one of which incorporates an electrical switch 20 which is sensitive to variations in the axial load on the auger shaft. A nozzle 22 in the passage 12 injects liquid into the grain passing therethrough into the auger. The liquid is supplied from a reservoir 24 by means of a positive displacement pump 26 via a flow control valve 30. The latter valve comprises a through passage 32 in which is an apertured valve member 34 which is rotatable to vary the alignment of the aperture with the through passage 32, thereby providing an adjustable degree of throttling of the passage. Between the pump and the flow control valve is a pressure relief valve 36 which bleeds off liquid from the pump outlet conduit when a predetermined liquid pressure is reached, thereby maintaining that constant liquid pressure to the flow control valve. The excess liquid diverted by the flow control valve is returned directly to the pump inlet (although it could be returned there indirectly by delivering it to the reservoir). A pressure gauge 38 is provided so that the liquid pressure to the flow control valve can be checked. The pressure relief valve 36 incorporates an electrical switch 40 which operates if the valve ceases to bleed off liquid.

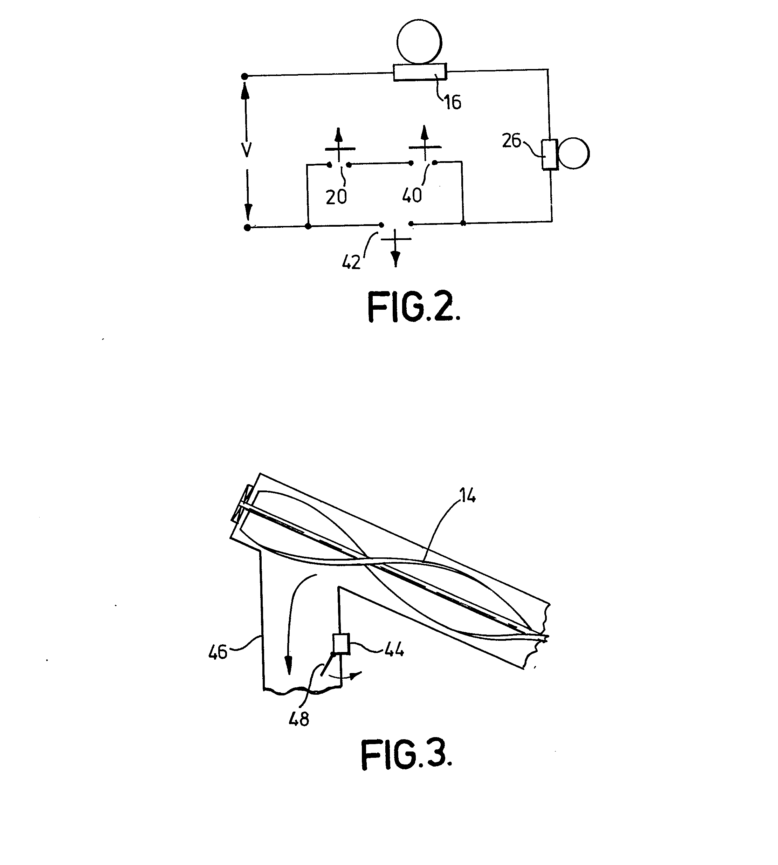

In operation, as illustrated also in Fig.2, grain is supplied in the hopper and liquid in the reservoir, and a spring-loaded starting switch 42 for the motor 16 and pump 26 is manually operated and held on for a short period (e.g. ten to fifteen seconds) until the auger is charged with grain and the predetermined liquid pressure from the pump is reached. Under those conditions the axial loading on the auger shaft operates the switch 20 and the bleeding of liquid through the valve 36 operates the switch 40. These switches are arranged in series with each other but in parallel to the starting switch 42, so that when both switches 20,40 are operated the starting switch is bypassed and the machine will continue to run when the starting switch is released. However, if the liquid pressure from the pump falls below the predetermined relief pressure, shutting off the switch 40, or if the supply of grain ceases so that the axial load in the auger is reduced, shutting off the switch 20, then the pump and auger motors are shut down automatically.

Since the liquid supply to the flow control valve 30 is at a constant predetermined pressure, the valve 30 can be calibrated, so that a desired flow rate can be selected by rotating the valve member 34 to the appropriate angular setting as indicated on a scale.

The principal mixing of liquid in the grain occurs in the region of the auger inlet as the grain is being picked up by the auger. Relatively little mixing occurs within the auger itself. However, if further mixing is required two or more augers could be provided, one discharging into the next to produce further mixing regions. The augers could be arranged to convey the grain in the same directions, or they could be arranged to change the direction of travel, either to keep down the size of the apparatus or to discharge the treated grain at a suitable place.

As an alternative to the load-sensitive switch 20 on the auger shaft, other types of switch may be used which are responsive to the flow of material through the auger. For example, as shown in Fig. 3, a spring biased switch 44 is arranged, for example in the upper discharge outlet 46 of the auger, so that its operating element 48 projects into the path of the material passing through the auger outlet, whereby the moving material deflects the element against its bias, but in the absence of material the switch changes in accordance with its bias and switches off the pump and auger.

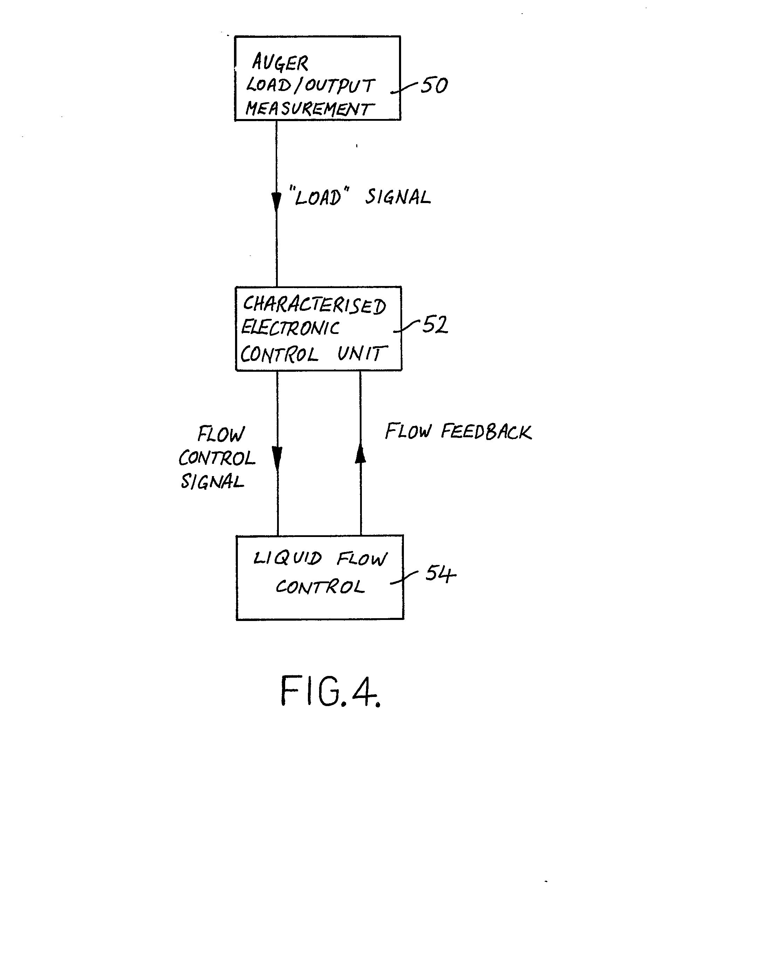

Rather than simply shut off the liquid supply if the grain flow falls too low, the liquid flow rate can additionally or alternatively be varied in response to variations in the grain flow rate, such as can result from variations in the level of grain in the supply hopper. This variation of liquid flow rate can be effected as discussed above. Fig. 4 shows how the control system can be arranged. The grain flow rate is measured by suitable sensing means 50, which, as

0015781

previously indicated, may measure the grain flow directly or else indirectly by means of auger speed, torque or power consumption. This produces a "load" signal which is passed to a characterised electronic control unit 52. This control unit produces a flow control signal corresponding to a liquid flow rate appropriate to the sensed grain flow rate, and passes this signal to the liquid flow control means 54. As previously discussed, this latter may take the form of pump speed control, pump displacement control or motorised flow control valve adjustment. The flow control means 54 also includes feedback means for providing a feedback signal to the control unit 52 to indicate the actual liquid flow rate. The feedback means may be a signal indicating the pump motor speed or displacement or the flow control valve setting, or it may be a signal from a separate flow meter located in the liquid supply line to the auger.

0015781

CLAIMS:

1.    Apparatus for applying liquid to grain, comprising a motor driven auger (14) along which the grain is to be transported from an inlet (12) to an outlet (46), and supply means (22,26,36) for injecting liquid into the moving grain, characterised in that an auger sensor (20,44,50) responsive to the flow of grain through the auger is arranged to vary or shut off the liquid supply in accordance  with the sensed rate of flow or the absence of flow of grain.

2.    Apparatus according to claim 1 wherein the auger sensor (20) is arranged to respond to changes in the axial loading on the auger shaft resulting from variations in the rate of flow of grain through the auger.

3.    Apparatus according to claim 1 wherein the auger sensor (44) comprises a deflectable element (48) projecting into the path of  the grain so that it is deflected by the moving grain to operate the switch.

4.    Apparatus according to claim 1 wherein the auger sensor (50) indirectly detects the grain flow rate by measuring the auger speed, the auger motor power consumption, or the auger shaft torque and provides a signal to a control unit (52) which causes the rate of flow of liquid to be varied in response to the detected grain flow rate.

5.    Apparatus according to any one of claims 1 to 4 including a liquid supply switch (40) responsive to the pressure or flow rate of liquid supply so as to shut off the liquid supply if that supply becomes inadequate.

0015781

6.    Apparatus according to claim 5 wherein the auger sensor (20) and the liquid supply switch (40) are in series with each other and with the auger motor (16) and the liquid supply means (26) whereby operation of either the auger sensor or liquid supply switch in response to inadequate grain flow or liquid supply switches off both the liquid supply and the auger.

7.    Apparatus according to any one of the preceding claims wherein the liquid supply comprises a liquid pump (26) with a pressure relief valve (36) arranged to divert excess liquid when the liquid supply pressure reaches a predetermined level.

8.    Apparatus according to claim 5 or claim 6 wherein the liquid supply comprises a liquid pump (26) with a pressure relief valve (36) arranged to divert excess liquid when the liquid supply pressure reaches a predetermined level, the liquid supply switch (40) being associated with the pressure relief valve (36) so as to operate to stop the liquid supply if the relief valve closes as a result of inadequate liquid pressure on the output side of the pump.

9.    Apparatus according to claim 7 or claim 8 wherein a variable throttle (30,32,34) is provided in the liquid supply line to the auger downstream of the pump and relief valve, whereby the flow rate can be set by adjustment of the throttle acting on the preset liquid supply pressure from the pump.

10.    Apparatus according to any one of the preceding claims wherein the liquid is injected into the grain in the inlet (12) before it enters the auger (14) so that the liquid is distributed in the grain by the mixing effect of turbulence in the grain as it enters the auger.

0015781

1/3

**FIG.1.**

FIG.2.

FIG.3.

FIG.4.

## DOCUMENTS CONSIDERED TO BE RELEVANT

| Category | Citation of document with indication, where appropriate, of relevant passages | Relevant to claim |
|---|---|---|
| | CH - A - 247 259 (CHARLES VINCENT)<br>* Whole document * | 1,2 |
| | DE - A - 2 232 980 (BERNARD S. GREEN)<br>* Page 3, line 30 - page 5, line 10 * | 9 |
| A | FR - A - 2 080 082 (PIERRE GUILLON) | |
| A | CH - B - 412 361 (LIMBURGER EISEN-GIESSEREI UND MASCHINENFABRIK THEODOR OHL KG) | |
| A | US - A - 4 008 829 (RANGASAMI SARAT CHANDRA) | |
| A | DE - A - 1 813 777 (ROLAND JOSEPH HAWES JUN.) | |
| A | DE - A - 2 137 568 (POUL IVAN DINESS) | |
| A | DE - A - 364 334 (RENE CAJETAN JOSEPH THIEBAUT) | |

**CLASSIFICATION OF THE APPLICATION (Int. Cl. 3)**

A 23 N 17/00

**TECHNICAL FIELDS SEARCHED (Int.Cl. 3)**

A 23 N
A 23 K
B 01 F
G 05 D

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| The present search report has been drawn up for all claims | | |
| Place of search<br>The Hague | Date of completion of the search<br>16-06-1980 | Examiner<br>DE RUITER |

EPO Form 1503.1  06.78